# EUROPÄISCHE PATENTSCHRIFT

(11) **EP 1 884 651 B1**
(45) Veröffentlichungstag und Bekanntmachung des Hinweises auf die Patenterteilung: **30.09.2009**
(21) Anmeldenummer: 06015968.8
(22) Anmeldetag: 01.08.2006
(51) Int. Cl.: F02M 21/02

(54) **Ölabscheider für gasbetriebene Brennkraftmaschinen**
Oil separator for gas operated internal combustion engines
Séparateur d'huile pour moteurs à combustion interne à gaz

(43) Veröffentlichungstag der Anmeldung: 06.02.2008
(73) Patentinhaber: GM Global Technology Operations, Inc., Detroit, MI 48265-3000 (US)
(72) Erfinder: Jauss, Andreas, 56479 Westernohe (DE); Zumbroich, Ingo, 64521 Gross-Gerau (DE)
(74) Vertreter: Strauss, Peter

(56) Entgegenhaltungen:
- FR-A1- 2 566 844
- GB-A- 2 376 193
- JP-A- 9 228 897
- JP-A- 2000 205 050
- US-A- 3 577 726
- US-A- 4 690 759

## Beschreibung

Die vorliegende Erfindung liegt auf dem Gebiet der Fahrzeugtechnik und betrifft Ölabscheider für gasbetriebene Brennkraftmaschinen gemäß den Oberbegriffen von Patentanspruch 1 und Patentanspruch 6.

Heutzutage werden zum Betreiben von gasbetriebenen Fahrzeugen hauptsächlich so genannte Flüssiggase und Erdgas eingesetzt. Flüssiggase, wie Autogas (LPG = Liquified Petroleum Gas), welche als Nebenprodukt aus Hydrierprozessen bei der Erdölraffinierung entstehen, basieren gewöhnlich auf Petroleum und bestehen im Wesentlichen aus Propan und Butan. Erdgas (CNG = Compressed Natural Gas) besteht hauptsächlich aus Methan und wird durch Förderung aus Erdgasquellen gewonnen.

Bei mit Erdgas betriebenen Kraftfahrzeugen ist es zur Speicherung einer größeren Kraftstoffmenge erforderlich, den Gaskraftstoff im Gastank unter einem hohen Druck von beispielsweise 200-300 bar zu verdichten. Für den Betrieb der Brennkraftmaschine muss der verdichtete Gaskraftstoff dann wieder auf einen geeigneten niedrigeren Gasdruck entspannt werden, welcher meist unterhalb von 10 bar liegt und beispielsweise ca. 8 bar beträgt. Die Entspannung des Gaskraftstoffs erfolgt in einem an die Gaskraftstoffzuleitung angeschlossenen Druckminderer, von dem aus der entspannte Gasstrom jeweiligen Gaseinblasventilen ("Gasinjektoren") zum Einblasen in den Ansaugtrakt der Brennkraftmaschine zugeführt wird.

Wie sich in der Praxis gezeigt hat, wird bei der Betankung des Kraftfahrzeugs an der Tankstelle der auf einen hohen Gasdruck verdichtete Gaskraftstoff häufig mit Schmieröl des zur Betankung eingesetzten Verdichters verunreinigt. Die Ursache hierfür ist in den immer kürzeren zeitlichen Abständen aufeinander folgender Betankungen aufgrund der stetig wachsenden Zahl gasbetriebener Kraftfahrzeuge zu finden. Dies kann dazu führen, dass in den Hochdruckstufen der Verdichter die Betriebstemperatur so stark ansteigt, dass Schmieröl verdampft und in gasförmiger Form oder als Aerosol mit dem Gaskraftstoff in den Gastank des Kraftfahrzeugs gelangt.

Wird der Gaskraftstoff im Druckminderer auf einen Gasdruck von beispielsweise 8 bar entspannt, so kühlt sich der Gaskraftstoff während der Entspannung ab, wodurch die eingeschleppten Ölbestandteile kondensieren und in flüssiger Form bzw. als Aerosol im Gaskraftstoff enthalten sind. Strömungstechnisch bedingt, verteilt sich das im Gaskraftstoff enthaltene Öl ungleichmäßig auf die Gasinjektoren, was zu unterschiedlichen Durchflusscharakteristiken in den Gaseinblasventilen und zu Problemen in der Abgasnachbehandlung führen kann. Hierdurch können Abgasvorgaben über die Laufstrecke gegebenenfalls nicht eingehalten werden und Fahrbarkeitsprobleme auftreten. Zudem besteht die Gefahr, dass Fahrzeugkomponenten, wie beispielsweise Katalysatoren, geschädigt werden. Darüber hinaus wurde auch das Verkleben bzw. Verharzen der Gasinjektoren mit den im Gaskraftstoff enthaltenen Ölbestandteilen beobachtet.

Um diese Probleme zu vermeiden, ist es bekannt, im Fahrzeug einen Ölabscheider in der Gaskraftstoffzuleitung zwischen dem Gastank und den Gasinjektoren vorzusehen. Gewöhnlich wird ein solcher Ölabscheider auf der Niederdruckseite des Druckminderers installiert, was die Vorteile hat, dass der Ölabscheider lediglich Druckfestigkeit gegen Niederdruck haben muss und dass das auf der Niederdruckseite des Druckmirderers kondensierte Öl in flüssiger Form beziehungsweise als Aerosol leichter abzuscheiden ist.

Bislang eingesetzte Ölabscheider sind so konstruiert, dass der Gaskraftstoff ein Vlies-Filter durchströmt, um hierdurch die im Kraftstoff enthaltenen Ölbestandteile abzutrennen. Mittels eines Vlies-Filters lassen sich im Wesentlichen jedoch nur die in Form eines Aerosols im Gaskraftstoff enthaltenen Ölbestandteile auffangen. Ist eine größere Menge flüssigen Öls im Gaskraftstoff enthalten, so führt dies gewöhnlich zu einer schnellen Sättigung des Vlies-Filters und zu einem Nachlassen der Filterwirkung. Aufgrund des anstehenden Gasstroms kann das im Vlies-Filter enthaltene Öl auf die Reingasseite "durchschlagen", was in nachteiliger Weise zur Folge haben kann, dass der Gaskraftstoff wieder verschmutzt wird.

Das US-Patent Nr. 3,577,726 zeigt einen Ölabscheider gemäß den Oberbegriffen von Patentanspruch 1 und Patentanspruch 6.

Demgegenüber besteht die Aufgabe der vorliegenden Erfindung darin, einen Ölabscheider zur Verfügung zu stellen, mit welchem der Gaskraftstoff zuverlässig und sicher von Ölbestandteilen gereinigt werden kann.

Diese Aufgabe wird nach dem Vorschlag der Erfindung durch Ölabscheider mit den Merkmalen der unabhängigen Ansprüche gelöst. Vorteilhafte Ausgestaltungen der Erfindung sind durch die Merkmale der Unteransprüche angegeben.

Erfindungsgemäß ist ein Ölabscheider zum Zwecke des Abscheidens von in Gaskraftstoff enthaltenen Ölbestandteilen gezeigt, welcher zum Anschluss an eine Gaskraftstoffzuleitung einer mit Gaskraftstoff betreibbaren Brennkraftmaschine, insbesondere zum Antrieb eines Kraftfahrzeugs, bestimmt und geeignet ist.

Der Ölabscheider umfasst ein Gehäuse mit einer Einströmöffnung für (mit Ölbestandteile verschmutzten) Gaskraftstoff und einer Ausströmöffnung für gereinigten Gasund ein in dem Gehäuse aufgenommenes Filterelement, beispielsweise ein Vlies-Filter, zum Filtrieren des Gas-kraftstoffs, das von dem Gaskraftstoff durchströmbar ist. Das Filterelement ist dichtend zwischen einem mit der Einströmöffnung strömungstechnisch (fluidleitend) verbundenen Eingangsraum und einem mit der Ausströmöffnung strömungstechnisch (fluidleitend) verbundenen Ausgangsraum angeordnet. Somit sind Eingangs- und Ausgangsraum lediglich über das Filterelement strömungstechnisch miteinander verbunden und ansonsten fluiddicht gegeneinander abgedichtet, so dass ein das Filterelement mit Überdruck anströmender Gaskraftstoffstrom das Filterelement ohne Umgehungsmöglichkeit passieren muss, um von dem anströmseitigen Eingangsraum in den abströmseitigen Ausgangsraum zu gelangen. Die Einströmöffnung mündet in den Eingangsraum, so dass (mit Ölbestandteilen verunreinigter) Gaskraftstoff dem Filterelement zugeleitet werden kann. Hierzu wird die Einströmöffnung an eine Gaskraftstoffzuleitung der Brennkraftmaschinenanordnung angeschlossen. Der gereinigte Gaskraftstoff im Ausgangsraum wird über die Ausströmöffnung aus dem Ölabscheider geleitet.

Weiterhin umfasst der erfindungsgemäße Ölabscheider einen ersten Ölsammelbehälter, welcher im Eingangsraum in Schwerkraftrichtung unterhalb einer mit der Einströmöffnung strömungstechnisch verbundenen Mündung zur Abgabe von Gaskraftstoff in den Eingangsraum geformt ist und der Aufnahme von im Eingangsraum mittels Schwerkraftabscheidung aus dem Gaskraftstoff abgeschiedenen Öls dient. Der erste Ölsammelbehälter ist demnach so angeordnet, dass er mittels Schwerkraftabscheidung abgeschiedene Ölbestandteile des Gas-kraftstoffs sammeln kann. Um eine Schwerkraftabscheidung zu begünstigen, wird der über die Einströmöffnung in den Eingangsraum einströmende Gaskraftstoff vorteilhaft so umgelenkt, dass eine entgegen der Schwerkraftrichtung gerichtete vektorielle Komponente des (vektoriellen) Gasstroms eine Zunahme erfährt.

In vorteilhafter Weise können somit mittels Schwerkraftabscheidung abscheidbare Ölbestandteile aus dem strömenden Gaskraftstoff im Eingangsraum separiert und in einem Ölsammelbehälter aufgefangen werden, noch bevor der Gaskraftstoff das Filterelement erreicht. Der Eingangsraum wirkt als "Ölfalle" für die im Gaskraftstoff enthaltenen Ölbestandteile.

Gemäß einem ersten Aspekt der Erfindung umfasst der erfindungsgemäße Ölabscheider weiterhin einen im Ausgangsraum in Schwerkraftrichtung unterhalb einer mit der Ausströmöffnung strömungstechnisch verbundenen Mündung geformten zweiten Ölsammelbehälter, welcher der Aufnahme von im Ausgangsraum von dem Filterelement ablaufenden Öl dient. Mittels des zweiten Ölsammelbehälters kann somit in vorteilhafter Weise von dem Filterelement austretendes Öl gesammelt werden, falls dieses nicht mehr in der Lage ist, das von dem Kraftstoff abfiltrierte Öl gefangen zu halten. Eine erneute Verschmutzung des Gaskraftstoffs kann vermieden werden. Der zweite Ölsammelbehälter kann insbesondere im Innern des ersten Ölsammelbehälters aufgenommen sein.

Gemäß einem zweiten Aspekt der Erfindung mündet die Einströmöffnung in einen vom Eingangsraum geformten Hohlraum, welcher über Durchbrechungen einer bodenseitigen Wandung mit dem ersten Ölsammelbehälter fluidleitend verbunden ist.

Bei einer vorteilhaften Ausgestaltung des erfindungsgemäßen Ölabscheiders ist dieser modulartig aufgebaut. Der Ölabscheider umfasst in dieser Ausgestaltung ein das Filterelement enthaltendes Filtermodul, ein die Einström- und die Ausströmöffnung enthaltendes Anschlussmodul, sowie ein die beiden ölsammelbehälter enthaltendes Ölsammelmodul, wobei das Filtermodul und das Ölsammelmodul jeweils am Anschlussmodul lösbar befestigt sind. Bei einem solchen modulartigen Aufbau des Ölabscheiders kann dieser in besonders einfacher Weise beispielsweise in einem Kraftfahrzeug montiert werden. Es ist hierzu lediglich notwendig, das Anschlussmodul am Kraftfahrzeug zu montieren, an eine Gaskraftstoffzuleitung der Brennkraftmaschine anzuschließen, und hiernach das Filtermodul und das Ölsammelmodul am Anschlussmodul zu beEbenso ist eine Wartung des Ölabscheiders gemäß vorgebbarer Service-Intervalle in besonders einfacher Weise möglich, da das Filtermodul und/oder das Ölsammelmodul bei montiertem Anschlussmodul abgenommen und erneut montiert werden können, etwa um das Filterelement zu wechseln oder die Ölsammelbehälter zu leeren.

Weiterhin erstreckt sich die Erfindung auf eine Brennkraftmaschinenanordnung, insbesondere zum Antrieb eines Kraftfahrzeugs, welche eine mit Gastkraftstoff betreibbare Brennkraftmaschine, einen Druckminderer zur Minderung des Gasdrucks des der Brennkraftmaschine zugeführten Gaskraftstoffs, welcher hochdruckseitig über eine Gaskraftstoffleitung mit wenigstens einem Gastank zum Speichern von Gaskraftstoff und niederdruckseitig durch eine Gaskraftstoffleitung mit wenigstens einem steuerbaren Gaseinblasventil zur Regelung des Gasstroms des der Brennkraftmaschine zugeführten Gaskraftstoffs fluidleitend verbunden ist, sowie einen wie oben beschriebenen Ölabscheider umfasst, wobei der Ölabscheider vorteilhaft an die niederdruckseitige Gaskraftstoffleitung angeschlossen ist.

Des Weiteren erstreckt sich die Erfindung auf ein Kraftfahrzeug mit einer wie oben beschriebenen Brennkraftmaschinenanordnung.

Die Erfindung wird nun anhand eines Ausführungsbeispiels näher erläutert, wobei Bezug auf die beigefügte Zeichnung genommen wird. Es zeigt:

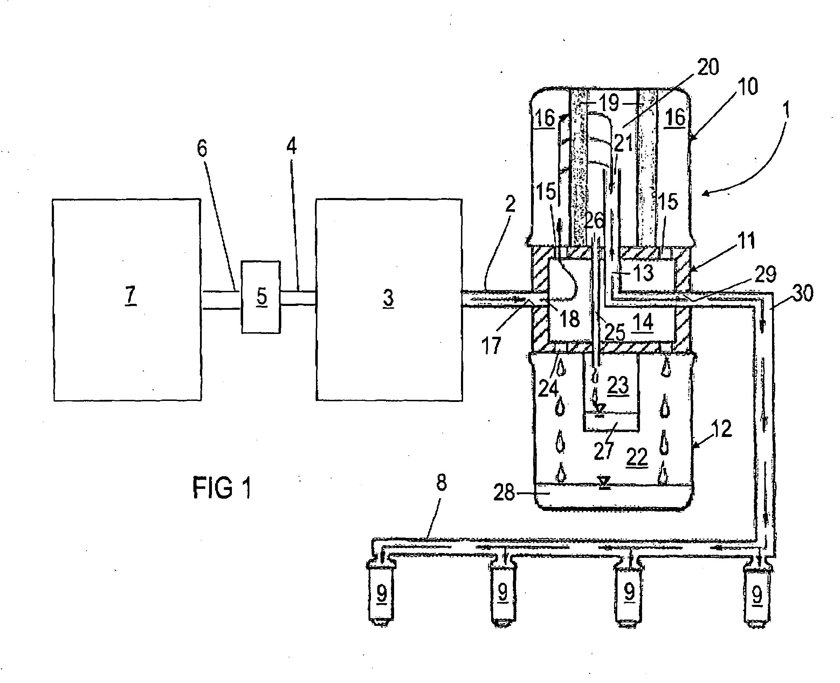

- Fig. 1: eine schematische Darstellung des Aufbaus eines Ausführungsbeispiels des erfindungsgemäßen Ölabscheiders in einer Brennkraftmaschinenanordnung, beispielsweise eines Kraftfahrzeugs.

Demnach umfasst eine Brennkraftmaschinenanordnung, welche vorzugsweise in einem Kraftfahrzeug eingebaut ist, einen insgesamt mit der Bezugszahl 1 bezeichneten, in Fig. 1 in schematischer Weise dargestellten, erfindungsgemäßen Ölabscheider, welcher eingangsseitig über eine Gaskraftstoffleitung 2 fluidleitend mit dem niederdruckseitigen Ausgang eines Druckminderers 3 verbunden ist.

Bei dem Druckminderer 3 kann es sich beispielsweise um einen mehrstufigen Druckminderer handeln, der eine Mehrzahl von über jeweilige Membran-Druckregelventile miteinander verbundene Druckkammern aufweist, beispielsweise eine eingangsseitige Hochdruckkammer, eine ausgangsseitige Niederdruckkammer und eine zwischenliegende Zwischendruckdruckkammer, in denen sich, geregelt durch die Membran-Druckregelventile ein hoher, ein niedriger, sowie ein zwischenliegender Gasdruck einstellt. Ein solcher Druckminderer kann jedoch auch eine andere Anzahl von Druckstufen aufweisen. Dem Fachmann ist der Aufbau eines solchen Druckminderers bekannt, so dass sich eine weitere Erläuterung hier erübrigt.

Der Druckminderer 3 ist auf seiner Hochdruckseite über eine Gaskraftstoffleitung 4 an ein Hochdruckabsperrventil 5 angeschlossen, durch das der dem Druckminderer 3 zugeführte Gaskraftstoffstrom gesperrt werden kann. Das Hochdruckabsperrventil 5 kann beispielsweise in Form eines Hauptventils mit integriertem Pilotventil ausgebildet sein, wobei das Pilotventil so ausgelegt ist, dass es mit der vom Bordnetz beispielsweise eines Kraftfahrzeugs zur Verfügung gestellten elektrischen Leistung elektromagnetisch steuerbar ist. Zu diesem Zweck ist eine Öffnungsfläche des Hauptventils wesentlich größer ausgebildet als eine solche des Pilotventils, so dass über das offene Hauptventil ein entsprechend größerer Gasmassenstrom transportiert werden kann als über das offene Pilotventil. In entsprechender Weise ist zur Öffnung des Pilotventils weniger Kraft erforderlich als zur Öffnung des Hauptventils. Dem Fachmann ist der Aufbau eines solchen Hochdruckabsperrventils bekannt, so dass sich eine weitere Erläuterung hier erübrigt.

Das Hochdruckabsperrventil 5 ist eingangsseitig über eine Gaskraftstoffleitung 6 mit einem Gastank 7 verbunden. Der Gastank 7 ist gewöhnlich mit einem separaten Absperrventil versehen, von welchem die mit dem Hochdruckabsperrventil 5 eingangsseitig verbundene Gaskraftstoffleitung 6 abzweigt.

Ausgangsseitig ist der Ölabscheider 1 an eine Gaskraftstoffleitung 30 angeschlossen, welche in eine im Allgemeinen als "Rail" bezeichnete Gaskraftstoffschiene 8 mündet. Am Ende der Gaskraftstoffschiene 8 sind eine Mehrzahl (in Fig. 1 beispielsweise vier) steuerbare Gasinjektoren 9 (Gaseinblasventile) angeordnet, durch welche Gaskraftstoff in den Ansaugtrakt einer Brennkraftmaschine eingeblasen werden kann, was in Fig. 1 nicht näher dargestellt ist. Die Anzahl der Gasinjektoren hängt von der Zylinderzahl der Brennkraftmaschine ab, und es sei lediglich der Vollständigkeit halber angemerkt, dass die Anzahl der Gasinjektoren nicht auf die Zahl 4 eingeschränkt ist, sondern von der speziellen Auslegung der Brennkraftmaschine abhängt.

Der in Fig. 1 dargestellte Ölabscheider 1 ist modulartig aufgebaut. Er setzt sich aus einem Filtermodul 10, einem Anschlussmodul 11 und einem Ölsammelmodul 12 zusammen. Hierbei sind das Filtermodul 10 und das Ölsammelmodul 12 jeweils am Anschlussmodul 11, beispielsweise mittels jeweiliger Gewindeverbindungen, lösbar befestigt. Die drei Module formen somit gemeinsam den Ölabscheider 1. Lediglich der Vollständigkeit halber sei darauf hingewiesen, dass die Module auch mithilfe anderer Befestigungsarten miteinander verbunden werden können, beispielsweise mittels federbelasteter Schnapp- oder Rastverschlüsse.

Das Anschlussmodul 11 ist mittels einer dessen seitliche Gehäusewandung durchbrechenden Einströmöffnung 17 an die Gaskraftstoffleitung 2 angeschlossen. Die Mündung 18 der Einströmöffnung 17 mündet in einen von dem Anschlussmodul 11 geformten Hohlraum 14. Der Hohlraum 14 ist mittels in der Gehäusewandung des Anschlussmoduls 11 geformten Durchbrechungen 15 fluidleitend mit einem von dem Filtermodul 10 geformten Hohlraum 16 verbunden. Im Filtermodul 10 ist ein hohlzylindrisch geformtes Filterelement 19 beherbergt, welches den Hohlraum 16 auf der Außenseite des Filterelements 19 von einem Hohlraum 20 innerhalb des Filterelements 19 trennt.

In den Hohlraum 20 ragt ein Anschlussrohr 13, welches mit seinem einen Ende eine Mündung 21 zum Aufnehmen von gereinigtem Gaskraftstoff formt und mit seinem anderen Ende mit einer die Wandung des Anschlussmoduls 11 durchbrechenden Ausströmöffnung 29 verbunden ist, welche ihrerseits an die Gaskrafstoffleitung 30 angeschlossen ist (in Fig. 1 als durchgehende Leitung gezeichnet).

Das am Anschlussmodul 11 auf dessen Unterseite montierte Ölsammelmodul 12 formt mit seinem Gehäuse einen ersten (äußeren) Ölsammelbehälter 22, in dessen Innern ein zweiter (innerer) Ölsammelbehälter 23 aufgenommen ist. Der äußere Ölsammelbehälter 22 ist mithilfe von in der bodenseitigen Wandung des Anschlussmoduls 11 geformten Durchbrechungen 24 fluidleitend mit dem von dem Anschlussmodul 11 geformten Hohlraum 14 verbunden. Insofern formen der von dem Anschlussmodul 11 geformte Hohlraum 14, der von dem Filtermodul 10 auf der Außenseite des Filterelements 19 geformte Hohlraum 16, sowie der äußere Ölsammelbehälter 22 gemeinsam einen auf der Anströmseite ("Schmutzgasseite") des Filterelements 19 befindlichen Eingangsraum, während der auf der Innenseite des Filterelements 19 geformte Hohlraum 20 einen auf der Abströmseite ("Reingasseite") des Filterelements 19 befindlichen Ausgangsraum formt.

Die Durchbrechungen 24 liegen in Schwerkraftrichtung tiefer als die Mündung 18 der Einströmöffnung 17, so dass von dem in den Hohlraum 14 einströmenden Gaskraftstoff mittels Schwerkraft separierte Ölbestandteile mittels der Durchbrechungen 24 in den äußeren Ölsammelbehälter 22 ablaufen können. Der innere Ölsammelbehälter 23 ist mithilfe eines in den Hohlraum 20 ragenden Verbindungsrohrs 25 fluidleitend mit diesem verbunden. Die Mündung 26 des verbindungsrohrs 25 befindet sich in Schwerkraftrichtung tiefer als die Mündung 21 des Anschlussrohrs 13, so dass von dem Filterelement 19 abfließendes Öl über das Verbindungsrohr 25 in den inneren Ölsammelbehälter 23 ablaufen kann, ohne hierbei den gereinigten Gaskraftstoff zu verunreinigen.

Im montierten zustand des Filtermoduls sind die beiden Ölsammelbehälter 22, 23 lediglich über das Filterelement 19 strömungstechnisch miteinander verbunden, um so eine das Filterelement 19 aussparende Gasströmung (Kurzschluss-Strömung) zu vermeiden.

Es erfolgt nun eine Beschreibung der Funktionsweise des Ölabscheiders 1. Der durch die Gaskraftstoffleitung 2 mit einem niedrigen Gasdruck von beispielsweise ca. 8-10 bar in den Ölabscheider 1 einströmende Gaskraftstoff tritt zunächst in den von dem Anschlussmodul 11 geformten Hohlraum 14 ein, wird anschließend um ca. 90° entgegen der Schwerkraftrichtung umgelenkt und gelangt durch Passieren der Durchbrechungen 15 in den von dem Filtermodul 10 auf der Außenseite des Filterelements 19 geformten Hohlraum 16. Im Wesentlichen im Hohlraum 14 werden flüssige Ölbestandteile des Gaskraftstoffs durch Schwerkraft abgeschieden, welche sich als Öllache 28 an der tiefsten Stelle, beispielsweise am Boden, des äußeren Ölsammelbehälters 22 sammeln. Die Abscheidung der flüssigen Ölbestandteile aus dem Gaskraftstoffstrom wird durch Umlenken der Strömungsrichtung um ca. 90°, so dass der einströmende Gaskraftstoff gezwungen ist, entgegen der Schwerkraftrichtung zu strömen, begünstigt. Da der Ölabscheider 1 auf der Niederdruckseite des Druckminderers 3 in der Gaszuführung der Brennkraftmaschine angeordnet ist, sind bereits kondensierte Ölbestandteile im Gaskraftstoffstrom leichter abzuscheiden.

Anschließend durchströmt der Gaskraftstoff das Filterelement 19, wodurch die im Gaskraftstoff, insbesondere in Form eines Aerosols, enthaltenen Ölbestandteile aufgefangen werden, und gelangt in den Hohlraum 20 auf der Innenseite des Filterelements 19. Von dort wird der gereinigte Gaskraftstoff über das Anschlussrohr 13 der Gaskraftstoffleitung 30 zugeführt, welche die Gasinjektoren 9 speist. Wenn das Filterelement 19 gesättigt ist, wird das gefangene öl durch den anstehenden Gaskraftstoffstrom zur Reingasseite, das heißt, in den Hohlraum 20 auf der Innenseite des Filterelements 19 transportiert, von wo es über das Verbindungsrohr 25 in den inneren Ölsammelbehälter 23 abfließen kann. Im Ölsammelbehälter 23 sammelt sich das Öl in einer Öllache 27 an einer tiefsten Stelle, beispielsweise am Boden des Sammelbehälters 23.

### Bezugszeichenliste

- 1: Ölabscheider
- 2: Gaskraftstoffleitung
- 3: Druckminderer
- 4: Gaskraftstoffleitung
- 5: Hochdruckabsperrventil
- 6: Gaskraftstoffleitung
- 7: Gastank
- 8: Rail
- 9: Gasinjektor
- 10: Filtermodul
- 11: Anschlussmodul
- 12: Ölsammelmodul
- 13: Anschlussrohr
- 14: Hohlraum
- 15: Durchbrechung
- 16: Hohlraum
- 17: Einströmöffnung
- 18: Mündung
- 19: Filterelement
- 20: Hohlraum
- 21: Mündung
- 22: Ölsammelbehälter
- 23: Ölsammelbehälter
- 24: Durchbrechung
- 25: Verbindungsrohr
- 26: Mündung
- 27: Öllache
- 28: Öllache
- 29: Ausströmöffnung
- 30: Gaskraftstoffleitung

## Patentansprüche

1. Ölabscheider (1) zum Abscheiden von in Gaskraftstoff enthaltenen Ölbestandteilen zum Anschluss an eine Gaskraftstoffleitung (2) einer gasbetriebenen Brennkraftmaschine, welcher umfasst:
- ein Gehäuse mit einer Einströmöffnung (17) und einer Ausströmöffnung (29) für Gaskraftstoff,
- ein im Gehäuse aufgenommenes, von dem Gaskraftstoff durchströmbares Filterelement (19), das dichtend zwischen einem mit der Einströmöffnung (17) strömungstechnisch verbundenen Eingangsraum (14, 16, 22) und einem mit der Ausströmöffnung (29) strömungstechnisch verbundenen Ausgangsraum (20) angeordnet ist,
- einen in dem Eingangsraum (14, 16, 22), in Schwerkraftrichtung unterhalb einer mit der Einströmöffnung strömungstechnisch verbundenen Mündung (18) zur Abgabe von Gaskraftstoff in den Eingangsraum, geformten ersten Ölsammelbehälter (22) zur Aufnahme von im Eingangsraum (14, 16, 22) mittels Schwerkraftabscheidung aus dem Gaskraftstoff abgeschiedenen Öl,
**dadurch gekennzeichnet, dass** der Ölabscheider (1) einen, im Ausgangsraum in Schwerkraftrichtung unterhalb einer mit der Ausströmöffnung (29) strömungstechnisch verbundenen Mündung (21) geformten, zweiten Ölsammelbehälter (23) zur Aufnahme von im Ausgangsraum (20) von dem Filterelement ablaufenden Öl umfasst.

2. Ölabscheider nach Anspruch 1,
welcher derart ausgebildet ist, dass ein Gaskraftstoffstrom des in den Eingangsraum (14, 16, 22) einströmenden Gaskraftstoffs eine Zunahme einer entgegen der Schwerkraftrichtung gerichteten vektoriellen Strömungskomponente erfährt.

3. Ölabscheider nach Anspruch 1,
bei welchem der zweite Ölsammelbehälter (23) innerhalb des ersten Ölsammelbehälters (22) angeordnet ist.

4. Ölabscheider nach einem der Ansprüche 1 bis 3, bei welchem die Einströmöffnung (17) in einen vom Eingangraum (14, 16, 22) geformten Hohlraum (14) mündet, welcher über Durchbrechungen (24) einer bodenseitigen Wandung mit dem ersten Ölsammelbehälter (22) fluidleitend verbunden ist.

5. Ölabscheider nach einem der Ansprüche 1 bis 4 mit einem modularen Aufbau, welcher
- ein das Filterelement (19) enthaltendes Filtermodul (10),
- ein die Einström- und die Ausströmöffnungen (17, 29) enthaltendes Anschlussmodul (11), und
- ein die beiden Ölsammelbehälter (22, 23) enthaltendes Ölsammelmodul (12) umfasst, wobei
das Filtermodul (10) und das Ölsammelmodul (12) jeweils am Anschlussmodul (11) lösbar befestigt sind.

6. Ölabscheider (1) zum Abscheiden von in Gaskraftstoff enthaltenen Ölbestandteilen zum Anschluss an eine Gaskraftstoffleitung (2) einer gasbetriebenen Brennkraftmaschine, welcher umfasst:
- ein Gehäuse mit einer Einströmöffnung (17) und einer Ausströmöffnung (29) für Gaskraftstoff,
- ein im Gehäuse aufgenommenes, von dem Gaskraftstoff durchströmbares Filterelement (19), das dichtend zwischen einem mit der Einströmöffnung (17) strömungstechnisch verbundenen Eingangsraum (14, 16, 22) und einem mit der Ausströmöffnung (29) strömungstechnisch verbundenen Ausgangsraum (20) angeordnet ist,
- einen in dem Eingangsraum (14, 16, 22), in Schwerkraftrichtung unterhalb einer mit der Einströmöffnung strömungstechnisch verbundenen Mündung (18) zur Abgabe von Gaskraftstoff in den Eingangsraum, geformten ersten Ölsammelbehälter (22) zur Aufnahme von im Eingangsraum (14, 16, 22) mittels Schwerkraftabscheidung aus dem Gaskraftstoff abgeschiedenen Öl,
**dadurch gekennzeichnet, dass** die Einströmöffnung (17) in einen vom Eingangraum (14, 16, 22) geformten Hohlraum (14) mündet, welcher über Durchbrechungen (24) einer bodenseitigen Wandung mit dem ersten Ölsammelbehälter (22) fluidleitend verbunden ist.

7. Ölabscheider nach Anspruch 6,
welche derart ausgebildet ist, dass ein Gaskraftstoffstrom des in den Eingangsraum (14, 16, 22) einströmenden Gaskraftstoffs eine Zunahme einer entgegen der Schwerkraftrichtung gerichteten vektoriellen Strömungskomponente erfährt.

8. Ölabscheider nach einem der vorhergehenden Ansprüche 6 bis 7, welcher weiterhin einen, im Ausgangsraum (20) in Schwerkraftrichtung unterhalb einer mit der Ausströmöffnung (29) strömungstechnisch verbundenen Mündung (21) geformten, zweiten Ölsammelbehälter (23) zur Aufnahme von im Ausgangsraum (20) von dem Filterelement ablaufenden Öl umfasst.

9. Ölabscheider nach Anspruch 8,
bei welchem der zweite Ölsammelbehälter (23) innerhalb des ersten Ölsammelbehälters (22) angeordnet ist.

10. Ölabscheider nach einem der Ansprüche 8 bis 9 mit einem modularen Aufbau, welcher
- ein das Filterelement (19) enthaltendes Filtermodul (10),
- ein die Einström- und die Ausströmöffnungen (17, 29) enthaltendes Anschlussmodul (11), und
- ein die beiden Ölsammelbehälter (22, 23) enthaltendes Ölsammelmodul (12) umfasst, wobei das Filtermodul (10) und das Ölsammelmodul (12) jeweils am Anschlussmodul (11) lösbar befestigt sind.

11. Brennkraftmaschinenanordnung, insbesondere zum Antrieb eines Kraftfahrzeugs, welche umfasst:
- eine mit Gaskraftstoff betreibbare Brennkraftmaschine,
- einen Druckminderer (3) zur Minderung des Gasdrucks des der Brennkraftmaschine zugeführten Gaskraftstoffs, welcher hochdruckseitig über eine Gaskraftstoffleitung (4, 6) mit wenigstens einem Gastank (7) zum Speichern von Gaskraftstoff und niederdruckseitig durch eine Gaskraftstoffleitung (2, 30, 8) mit wenigstens einem steuerbaren Gaseinblasventil (9) zur Regelung des Gasstroms des der Brennkraftmaschine zugeführten Gaskraftstoffs fluidleitend verbunden ist, wobei die Brennkraftmaschinenanordnung einen Ölabscheider (1) nach einem der vorhergehenden Ansprüche 1 bis 10 umfasst.

12. Brennkraftmaschinenanordnung nach Anspruch 11, bei welcher der Ölabscheider (1) auf der Niederdruckseite des Druckminderers (3) angeordnet ist.

13. Kraftfahrzeug mit einer Brennkraftmaschinenanordnung nach einem der Ansprüche 11 bis 12.

## Claims

1. An oil separator (1) for separating oil components
contained in gas fuels for connection to a gas fuel line (2) of a gas-powered combustion engine, which comprises as follows:
- a housing with an inflow opening (17) and outflow opening (29) for gas fuel;
- a filter element (19) which is received in the housing, can be flowed through by a gas fuel and is arranged in a sealing manner between an input chamber (14, 16, 22) which is flow-connected with the input opening (17) and an output chamber (20) which is flow-connected with the outflow opening (29);
- a first oil collecting vessel (22) for receiving oil separated from the gas fuel in the input chamber (14, 16, 22) by means of gravity separation, which vessel is formed in the input chamber (14, 16, 22) in the direction of gravity beneath an orifice (18) for supplying gas fuel to the input chamber, which orifice is flow-connected with the inflow opening;
**characterized in that** the oil separator (1) comprises a second oil collecting vessel (23) for receiving oil running off from the filter element in the output chamber (20), which vessel is formed in the output chamber in the direction of gravity beneath an orifice (21) which is flow-connected with the outflow opening (29).

2. An oil separator according to claim 1, which is arranged in such a way that a gas fuel flow of the gas fuel flowing into the input chamber (14, 16, 22) is subjected to an increase of a vectorial flow component directed against the direction of gravity.

3. An oil separator according to claim 1, wherein the second oil collecting container (23) is arranged within the first oil collecting container (22).

4. An oil separator according to one of the claims 1 to 3, wherein the inflow opening (17) opens into a cavity (14) formed by the input chamber (14, 16, 22) which is connected via breakthroughs (24) of a wall on the floor side with the first oil collecting vessel (22) in a fluid-conductive manner.

5. An oil separator according to one of the claims 1 to 4, having a modular configuration which comprises
- a filter module (10) containing the filter element (19);
- a connection module (11) containing the inflow and outflow openings (17, 29), and
- an oil collecting module (12) containing the two oil collecting containers (22, 23), with
the filter module (10) and the oil collecting module (12) each being detachably fastened to the connection module (11).

6. An oil separator (1) for separating oil components contained in gas fuel for connection to a gas fuel line (2) of a gas-operated combustion engine, which comprises as follows:
- a housing with an inflow opening (17) and outflow opening (29) for gas fuel;
- a filter element (19) which is received in the housing, can be flowed through by a gas fuel and is arranged in a sealing manner between an input chamber (14, 16, 22) which is flow-connected with the input opening (17) and an output chamber (20) which is flow-connected with the outflow opening (29);
- a first oil collecting vessel (22) for receiving oil separated from the gas fuel in the input chamber (14, 16, 22) by means of gravity separation, which vessel is formed in the input chamber (14, 16, 22) in the direction of gravity beneath an orifice (18) for supplying gas fuel to the input chamber, which orifice is flow-connected with the inflow opening;
**characterized in that** the inflow opening (17) opens into a cavity (14) formed by the input chamber (14, 16, 22) which is connected via breakthroughs (24) of a wall on the floor side with the first oil collecting vessel (22) in a fluid-conductive manner.

7. An oil separator according to claim 6, which is arranged in such a way that a gas fuel flow of the gas fuel flowing into the input chamber (14, 16, 22) is subjected to an increase of a vectorial flow component directed against the direction of gravity.

8. An oil separator according to one of the claims 6 to 7, which further comprises a second oil collecting vessel (23) for receiving oil running off from the filter element in the output chamber (20), which vessel is formed in the output chamber (20) in the direction of gravity beneath an orifice (21) which is flow-connected with the outflow opening (29).

9. An oil separator according to claim 8, wherein the second oil collecting vessel (23) is arranged within the first oil collecting container (22).

10. An oil separator according to one of the claims 8 to 9, having a modular configuration which comprises
- a filter module (10) containing the filter element (19);
- a connection module (11) containing the inflow and outflow openings (17, 29), and
- an oil collecting module (12) containing the two oil collecting containers (22, 23), with the filter module (10) and the oil collecting module (12) each being detachably fastened to the connection module (11).

11. A combustion engine arrangement, especially for driving a motor vehicle, which comprises:
- a combustion engine which can be driven with gas fuel;
- a pressure reducer (3) for reducing the gas pressure of the gas fuel supplied to the combustion engine which is connected in a fluid-conductive manner on the high-pressure side via a gas fuel line (4, 6) with at least one gas tank (7) for storing gas fuel and on the low-pressure side by a gas fuel line (2, 30, 8) with at least one controllable gas injection valve (9) for adjusting the gas flow of the gas fuel supplied to the combustion engine, with the combustion engine arrangement comprising an oil separator (1) according to one of the preceding claims 1 to 10.

12. A combustion engine arrangement according to claim 11, wherein the oil separator (1) is arranged on the low-pressure side of the pressure reducer (3).

13. A motor vehicle with a combustion engine arrangement according to one of the claims 11 to 12.

## Revendications

1. Séparateur d'huile (1) pour séparer des composants huileux contenus dans un carburant gazeux, destiné à être raccordé à une conduite de carburant gazeux (2) d'un moteur à combustion interne fonctionnant au gaz, comprenant
- un boîtier avec une ouverture d'entrée (17) et une ouverture de sortie (29) pour du carburant gazeux,
- un élément de filtre (19) logé dans le boîtier et pouvant être traversé par le carburant gazeux, qui est disposé de façon étanche entre un espace d'entrée (14, 16, 22) en liaison pour l'écoulement avec l'ouverture d'entrée (17) et un espace de sortie (20) en liaison pour l'écoulement avec l'ouverture de sortie (29),
- un premier collecteur d'huile (22) formé dans l'espace d'entrée (14,16, 22) en dessous, dans le sens de la gravité, d'une embouchure (18) reliée pour l'écoulement avec l'ouverture d'entrée pour dispenser du carburant gazeux dans l'espace d'entrée, destiné à recevoir l'huile séparée du carburant gazeux par séparation par gravité dans l'espace d'entrée (14, 16, 22),
**caractérisé en ce que** le séparateur d'huile (1) comprend un deuxième collecteur d'huile (23) formé en dessous, dans le sens de la gravité, d'une embouchure (21) reliée pour l'écoulement à l'ouverture de sortie (29) pour recevoir l'huile s'écoulant de l'élément filtrant dans l'espace de sortie (20).

2. Séparateur d'huile selon la revendication 1, conformé de telle manière qu'un flux de carburant gazeux du carburant gazeux entrant dans l'espace d'entrée (14, 16, 22) subit une augmentation d'une composante d'écoulement vectorielle dirigée en sens inverse de la gravité.

3. Séparateur d'huile selon la revendication 1, dans lequel le deuxième collecteur d'huile (23) est disposé à l'intérieur du premier collecteur d'huile (22).

4. Séparateur d'huile selon l'une des revendications 1 à 3, dans lequel l'ouverture d'entrée (17) débouche dans une cavité (14) formée par l'espace d'entrée (14, 16, 22) qui est reliée au premier collecteur d'huile (22) par des ouvertures (24) d'une paroi du côté du fond de façon à acheminer un fluide.

5. Séparateur d'huile selon l'une des revendications 1 à 4 avec une structure modulaire, qui comprend
- un module de filtre (10) contenant l'élément filtrant (19),
- un module de raccordement (11) contenant les ouvertures d'entrée et de sortie (17, 29) et
- un module collecteur d'huile (12) contenant les deux collecteurs d'huile (22, 23),
dans lequel le module de filtre (10) et le module collecteur d'huile (12) sont fixés chacun de manière amovible au module de raccordement (11).

6. Séparateur d'huile (1) pour séparer des composants huileux contenus dans un carburant gazeux destiné à être raccordé à une conduite de carburant gazeux (2) d'un moteur à combustion interne fonctionnant au gaz, comprenant
- un boîtier avec une ouverture d'entrée (17) et une ouverture de sortie (29) pour du carburant gazeux,
- un élément de filtre (19) logé dans le boîtier et pouvant être traversé par le carburant gazeux, qui est disposé de façon étanche entre un espace d'entrée (14, 16, 22) en liaison pour l'écoulement avec l'ouverture d'entrée (17) et un espace de sortie (20) en liaison pour l'écoulement avec l'ouverture de sortie (29),
- un premier collecteur d'huile (22) formé dans l'espace d'entrée (14,16, 22) en dessous, dans le sens de la gravité, d'une embouchure (18) reliée pour l'écoulement avec l'ouverture d'entrée pour dispenser du carburant gazeux dans l'espace d'entrée, destiné à recevoir l'huile séparée du carburant gazeux par séparation par gravité dans l'espace d'entrée (14, 16, 22),
**caractérisé en ce que** l'ouverture d'entrée (17) débouche dans une cavité (14) formée par l'espace d'entrée (14, 16, 22), qui est reliée au premier collecteur d'huile (22) par des ouvertures (24) d'une paroi du côté du fond de façon à acheminer un fluide.

7. Séparateur d'huile selon la revendication 6, qui est conformé de telle sorte qu'un flux de carburant gazeux du carburant gazeux entrant dans l'espace d'entrée (14, 16, 22) subit une augmentation d'une composante d'écoulement vectorielle dirigée en sens inverse de la gravité.

8. Séparateur d'huile selon l'une des revendications 6 à 7, qui comprend en outre un deuxième collecteur d'huile (23) formé dans l'espace de sortie (20) en dessous, dans le sens de la gravité, d'une embouchure (21) reliée pour l'écoulement à l'ouverture de sortie (29) pour recevoir l'huile s'écoulant de l'élément filtrant dans l'espace de sortie (20).

9. Séparateur d'huile selon la revendication 8, dans lequel le deuxième collecteur d'huile (23) est disposé à l'intérieur du premier collecteur d'huile (22).

10. Séparateur d'huile selon l'une des revendications 8 à 9 avec une structure modulaire, qui comprend
- un module de filtre (10) contenant l'élément filtrant (19),
- un module de raccordement (11) contenant les ouvertures d'entrée et de sortie (17, 29) et
- un module collecteur d'huile (12) contenant les deux collecteurs d'huile (22, 23),
dans lequel le module de filtre (10) et le module collecteur d'huile (12) sont fixés chacun de manière amovible au module de raccordement (11).

11. Dispositif de moteur à combustion interne, en particulier pour la propulsion d'un véhicule à moteur, comprenant :
- un moteur à combustion interne pouvant fonctionner avec un combustible gazeux,
- un détendeur (3) pour réduire la pression de gaz du carburant gazeux amené au moteur à combustion interne, qui est relié du côté haute pression par une conduite de carburant gazeux (4, 6) à au moins un réservoir de gaz (7) pour l'accumulation de carburant gazeux et du côté basse pression par une conduite de carburant gazeux (2, 30, 8), de façon à acheminer un fluide, à au moins une soupape d'injection de gaz (9) pouvant être contrôlée pour la régulation du flux de gaz du carburant gazeux amené au moteur à combustion interne, lequel dispositif de moteur à combustion interne comprend un séparateur d'huile (1) selon l'une des revendications 1 à 10.

12. Dispositif de moteur à combustion interne selon la revendication 11, dans lequel le séparateur d'huile (1) est disposé sur le côté basse pression du détendeur (3).

13. Véhicule à moteur avec un dispositif de moteur à combustion interne selon l'une des revendications 11 à 12.
